# EUROPEAN PATENT SPECIFICATION

(11) **EP 2 782 319 B1**
(45) Date of publication and mention of the grant of the patent: **06.07.2016**
(21) Application number: 13160174.2
(22) Date of filing: 20.03.2013
(51) Int. Cl.: H04L 29/08, H04L 29/06

(54) **Proxy device interconnecting communications networks and including a caching unit**
Proxy-Vorrichtung mit Zwischenspeichereinheit zum Verbinden von Kommunikationsnetzen
Dispositif de proxy interconnectant des réseaux de communication et incluant une unité de cache

(43) Date of publication of application: 24.09.2014
(73) Proprietor: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Rollet, Romain, 35708 Rennes Cedex 7 (FR)
(74) Representative: Le Guen-Maillet

(56) References cited:
- US-A1- 2006 002 320
- US-A1- 2006 075 100
- US-A1- 2007 162 165
- US-B1- 7 656 822
- STUART CHESHIRE MARC KROCHMAL APPLE INC: "Multicast DNS; draft-cheshire-dnsext-multicastdns-08.txt" , MULTICAST DNS; DRAFT-CHESHIRE-DNSEXT-MULTICASTDNS-08.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 8, 10 September 2009 (2009-09-10), XP015064093, [retrieved on 2009-09-09]

## Description

The present invention generally relates to a proxy mechanism adapted to process advertisement messages and queries at an interconnection of plural communications networks, in the scope of a device discovery protocol.

Device discovery protocols are widely implemented in communications networks, in order for any communication device to automatically obtain information about parameters of other communication devices and/or about functionalities implemented by other communication devices and/or services implemented by other communication devices.

Domain Name System (DNS) is a hierarchical distributed naming system for computers, services, or any resource connected to the Internet or a private communications network. DNS associates various information with domain names assigned to each entity participating in the considered communications network, such as functionalities and/or services implemented by said participating entities. Among other functions, DNS allows translating domain names to IP addresses needed for the purpose of addressing communication devices in the considered communications network.

Multicast Domain Name System (mDNS) is a decentralised DNS approach with quite similar packet formats and operating, which therefore does not require any centralised server to operate and which relies on multicast transmissions of messages. The mDNS protocol is part of IETF Zero Configuration Networking (Zeroconf), a set of techniques that automatically creates a usable Internet Protocol (Internet Protocol, as specified in the normative document RFC 791) network without manual operator intervention nor specific configuration servers. Apple Inc.'s technologies RendezVous and Bonjour rely on the mDNS principles. The mDNS protocol is detailed in a set of normative documents, such as RFC 1034 "Domain Names - Concepts and Facilities" and RFC 1035 "Domain Names - Implementation and Specification".

After initialization, the communication devices implementing the mDNS protocol advertises resource records representing their respective configuration parameters, e.g. IP addresses, as well as implemented functionalities and/or services, *e.g.* IPP (Internet Printing Protocol) printing service. This phase is sometimes referred to as *Announcing.* Each advertisement message contains at least a resource record of type "A" indicating an IPv4 address of the communication device, or of type "AAAA" indicating an IPv6 address of the communication device, as well as a symbolic name of the communication device to which the advertisement message refers. Each advertisement message may further contain resource records of other types, such as PTR (Domain Name Pointer), SVC (Service) and NSEC (Next-Secure). Each resource record is typically associated with a time-to-live indication, specified in the TTL (Time-To-Live) field of the corresponding resource record contained in the advertisement message. The time-to-live indication is representative of a time period during which the associated resource record is valid.

A problem encountered with device discovery protocols, such as mDNS, is that numerous multicast messages are exchanged to propagate advertisement messages and queries, especially in case of interconnected communications network. For example, a printing service client typically periodically transmits a query, namely a query with PTR resource record type labelled "_http._tcp.local" to discover printer devices available via the communications network. Each printer device receiving the query replies with a multicast response, which may lead to a quite long multicast burst when many printers are present in the communications network. Those long and frequent multicast bursts may be a critical issue for network resources management, especially in case of wireless communications network. Indeed, in many wireless communication technologies, e.g. the IEEE 802.11 standard, since the broadcast and multicast traffic is not acknowledged, a more resilient modulation and coding scheme is implemented compared to the acknowledged unicast traffic. Long and frequent multicast bursts therefore increase communications overhead and significantly decrease the available bandwidth.

Such multicast message exchanges moreover lead to extra power consumption and even avoid some communication devices to enter stand-by mode, since said communication devices have to interpret transmitted queries and advertisement messages, and possibly respond to said transmitted queries.

Document US 2006/002320 A1 describes a UPnP relay module receiving multicast service announcements and storing these announcements in a cache. Cached service announcements that satisfy a query sent by a mobile device are returned to the mobile device.

Document US 2007/162165 A1 describes a UPnP device aggregator whose primary function is to collect information about UPnP devices by monitoring the UPnP SSDP traffic and to aggregate this information into a RSS/Atom feed.

Document US 2006/075100 A1 describes a low power proxy which listens to all UPnP multicast messages, collects this information and stores it in a directory. The low power proxy may send a response to a search query.

Document US 7 656 822 B1 describes a resource discovery and description mechanism generating markup language documents (advertisements) which may be indexed and stored within a distributed or, alternatively, centralized cache. The cached advertisements may be queried for a specific resource.

It is desirable to overcome the aforementioned problems of the state of the art.

In particular, it is desirable to provide a solution that allows reducing the amount of messages exchanged in the scope of the device discovery, therefore reducing the bandwidth consumption.

It is furthermore desirable to provide a solution that avoids awakening communication devices in stand-by mode in the scope of the device discovery.

It is furthermore desirable to provide a solution that is easy-to-implement and that is cost-effective.

To that end, the present invention concerns a method according to claim 1.

Thus, the amount of messages exchanged in the scope of the device discovery is reduced, as the proxy device generates a single response on behalf of plural communication devices when needed. Moreover, awakening communication devices in stand-by mode is avoided to respond to the query.

Furthermore, flexibility is brought to the usage of the proxy device at the interconnection of plural communications networks.

According to a particular feature, when retrieving the pieces of information corresponding to the received query from the caching unit and when the received query is received in multicast form, the proxy device filters the pieces of information stored by the caching unit, by removing the pieces of information about communication devices connected to the communications network from which said received query has been received by the proxy device.

Thus, the proxy device doesn't respond for communication devices that directly received the query message.

According to a particular feature, when the received query is received in unicast form by the proxy device via a wireless communications network, the proxy device propagates in multicast form the received query via said wireless communications network, only when the proxy device has no authority for responding on behalf of communication devices connected thereto.

Thus, propagating the multicast query is avoided when possible.

According to a particular feature, when retrieving the pieces of information corresponding to the received query from the caching unit, the proxy device checks a time-to-live indication associated with the retrieved pieces of information, and when the time-to-live indication shows validity expiry of the retrieved pieces of information, the proxy device performs: transmitting at least one query in unicast form to each communication device for which a piece of information is retrieved and associated with the time-to-live indication showing validity expiry, said at least one transmitted query being adapted to verify said validity; and postponing the steps of generating and transmitting the response message up to a predetermined instant at which the received query shall be responded, until at least one response to respective said at least one transmitted query in unicast form is received by the proxy device.

Thus, the most up-to-date data are transmitted in the response.

According to a particular feature, the pieces of information stored by the caching unit being associated with a time-to-live indication representative of a time period P of validity of said stored pieces of information, the proxy device keeps up-to-date the stored pieces of information by: checking whether a time period equal to N times said time period P has expired since the last update of said time-to-live indication, wherein N is a positive integer greater than 1; and, transmitting at least one query in unicast form to each communications device for which a piece of information is stored and associated with the time-to-live indication showing validity expiry, said at least one transmitted query being adapted to verify said validity.

Thus, a reduced amount of exchanges are performed for keeping up-to-date the data stored in the caching unit.

According to a particular feature, the pieces of information stored by the caching unit being associated with a time-to-live indication representative of a time period of validity of said stored pieces of information, the proxy device keeps up-to-date the stored pieces of information by: receiving an advertisement including expired information associated with a null time-to-live indication; and, removing from the caching unit the piece of information corresponding to said expired information.

Thus, a communication device may cancel a previous advertisement using a null time-to-live indication, and the caching unit is maintained consistent with advertisements propagated via the communications network.

According to a particular feature, the proxy device stores a configuration parameter indicating, for each said communications network, whether responses to received queries have to be transmitted by the proxy device as unicast or multicast messages to the communication devices having respectively transmitted the queries.

Thus, multicast transmissions may be limited according to a predefined criteria, for instance set by an administrator of the communications networks. For instance, the configuration parameter is set according to security and/or privacy considerations. Moreover, some network infrastructure devices, such as bridges, may be configured to filter multicast transmissions. The configuration parameter might therefore be set according to such filtering constraints.

According to a particular feature, the configuration parameter is defined according to a type of said communications network.

For instance, multicast responses are privileged on Ethernet networks, whereas multicast responses are privileged on Wi-Fi (registered trademark) networks, which optimizes network resource consumption, as multicast transmissions (not acknowledged) may require a more robust modulation and coding scheme than unicast transmissions (acknowledged).

According to a particular feature, advertisement messages and queries are in accordance with the mDNS protocol.

The present invention also concerns a computer program according to claim 10.

The present invention also concerns information storage means according to claim 11.

The present invention also concerns a proxy device according to claim 12.

Since the features and advantages related to the proxy device and to the computer program are identical to those already mentioned with regard to the corresponding aforementioned method, they are not repeated here.

The characteristics of the invention will emerge more clearly from a reading of the following description of an example of embodiment, said description being produced with reference to the accompanying drawings, among which:
Fig. 1 schematically represents a proxy device interconnecting a first communications network and a second communications network;
Fig. 2 schematically represents an architecture of the proxy device;
Fig. 3 schematically represents an algorithm, performed by the proxy device, for handling data of a caching unit of the proxy device;
Fig. 4 schematically represents an algorithm, performed by the proxy device, for processing queries using data stored by the caching unit;
Fig. 5 schematically represents an algorithm, performed by the proxy device, for keeping up-to-date the data stored by the caching unit.

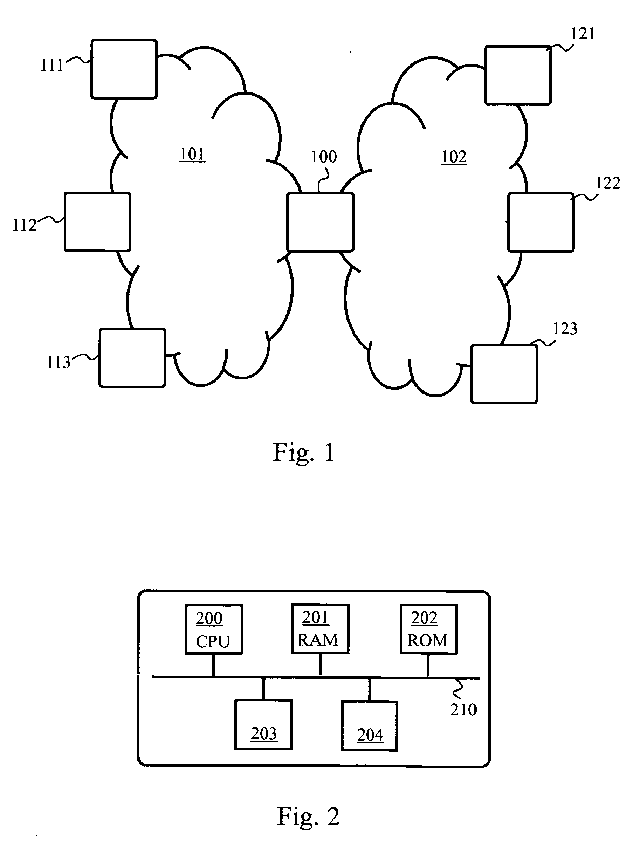

Fig. 1 schematically represents a proxy device 100 interconnecting a first communications network 101 and a second communications network 102. The proxy device 100 may interconnect more communications networks. The proxy device 100 may be an Ethernet bridge, an IP router, a Wi-Fi (registered trademark) access point or a router implementing the same.

Each communications network interconnected by the proxy device 100 comprises one or more communication devices. Fig. 1 shows three communication devices 111, 112, 113, in the first communications network 101 and three communication devices 121, 122, 123, in the second communications network 102.

The communication devices connected to the first 101 or second 102 communications network are adapted to advertise via said communications network functionalities and/or services respectively implemented by said communication devices. To achieve this, the communication devices are adapted to transmit via said communications network respective advertisement messages including information representative of said communication devices and of said functionalities and/or services.

The communication devices connected to the first 101 or second 102 communications network are further adapted to respond to queries received via the communications network to which the communication devices are respectively connected.

In a preferred embodiment, the communication devices implement the mDNS protocol, although other discovery protocols may be implemented, such as SSDP (Simple Service Discovery Protocol) as implemented in the UPnP (Universal Plug n' Play) standard. However, SSDP relies on XML (eXtended Markup Language) and HTTP (HyperText Transfer Protocol, as specified in the normative document RFC 2616 for HTTP/1.1), whereas mDNS relies on UDP (User Datagram Protocol, as specified in the normative document RFC 768).

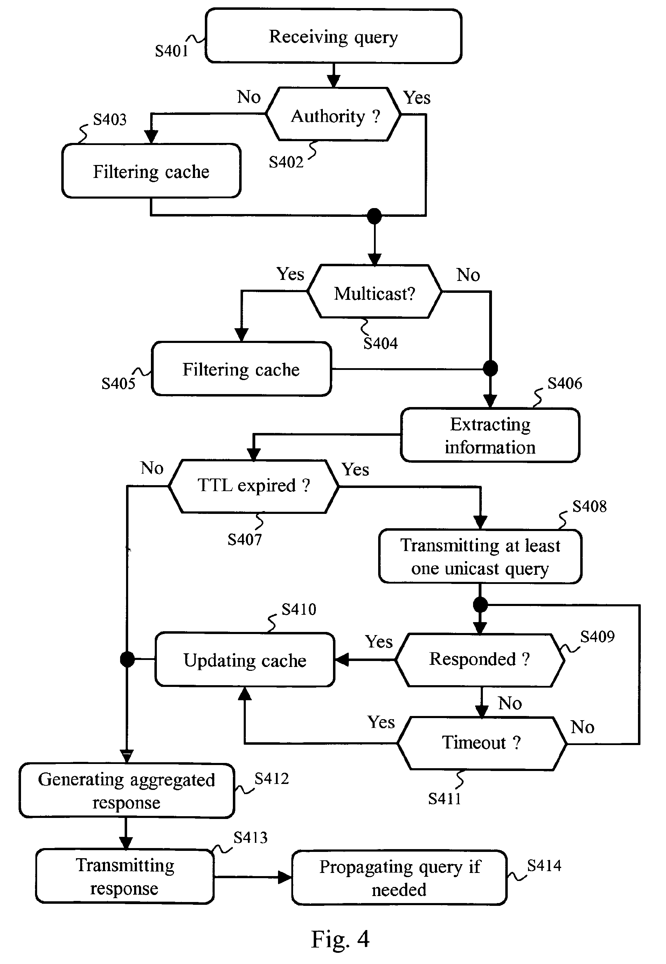

When a communications network is a wireless communications network managed by an access point, as is the case of Wi-Fi (registered trademark) or IEEE 802.11 networks, advertisement messages and queries are transmitted in unicast form to the access point, which is then expected to multicast the advertisement messages and queries via the wireless communications network. Indeed, due to shadowing effects, some communication devices of the wireless communications network may not be able to directly communicate with other communication devices of the wireless communications network, and the access point acts as a relay at link layer level (OSI model) to enable communications between said communication devices. Under certain circumstances, as detailed hereafter with regard to Fig. 4, even though the communications network is such a wireless communications network, the proxy device 100 acting as access point does not multicast advertisement messages and queries received in unicast form.

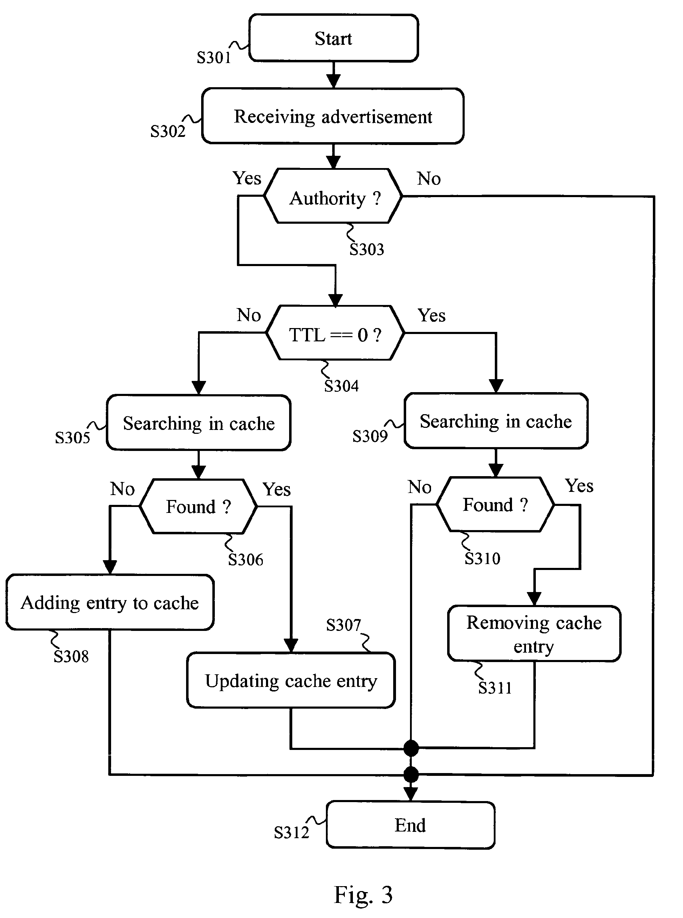

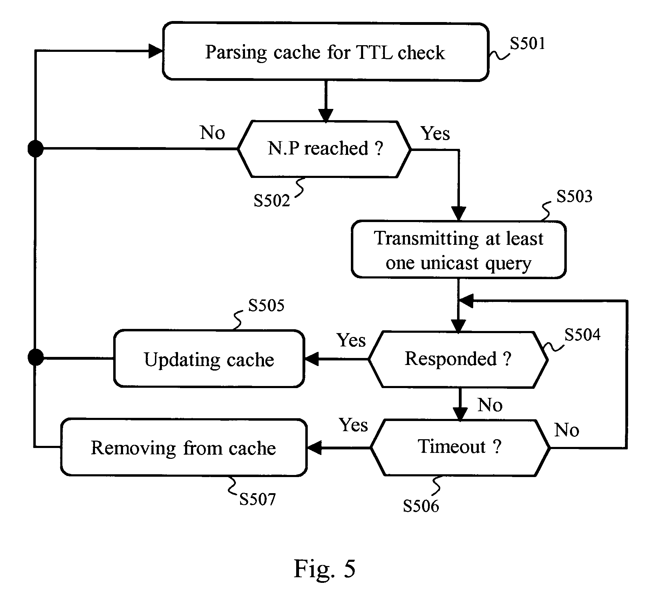

The proxy device 100 comprises a caching unit storing data collected by the proxy device 100 when receiving advertisement messages from communication devices connected to the communications network that the proxy device 100 interconnects. Under certain circumstances, the proxy device 100 responds to queries on behalf of one or more communication devices, as detailed hereafter with regard to Fig. 4. Selecting the data to be stored by the caching unit is detailed hereafter with regard to Fig. 3 and keeping up-to-date said data is detailed hereafter with regard to Fig. 5.

The data stored by the caching unit may be recorded in a structure having the following format: a first structure element indicates the communications network to which the communication device to which the data relate is connected; a second structure element indicates the IP address of said communication device; a third structure element stores the concerned service or functionality data advertised by said communication device, *e.g*. the advertised resource record in the terminology of the mDNS protocol; a fourth structure element storing a time-to-live indication associated with the advertised data, representative of an expiry instant of the validity of said data. The stored structures may be organised as a hash table indexed using a hash key that derives from the stored data.

**Fig. 2** schematically represents an architecture of the proxy device 100. According to the shown architecture, the proxy device 100 comprises the following components interconnected by a communications bus 210: a processor, microprocessor, microcontroller or CPU (*Central Processing Unit)* 200; a RAM (*Random-Access Memory*) 201; a ROM *(Read-Only Memory*) 202; an HDD (*Hard Disk Drive)* 203, or any other device adapted to read information stored on storage means; and, a set 204 of communication interfaces, which allows connecting the proxy device 100 to the first communications network 101 and to the second communications network 102.

CPU 200 is capable of executing instructions loaded into RAM 201 from ROM 202, from an external memory such as an SD *(Secure Digital*) card, or from HDD 203. After the proxy device 100 has been powered on, CPU 200 is capable of reading instructions from RAM 201 and executing these instructions. The instructions form one computer program that causes CPU 200 to perform some or all of the steps of the algorithms described hereafter.

Any and all steps of the algorithms described hereafter may be implemented in software by execution of a set of instructions or program by a programmable computing machine, such as a PC (*Personal Computer*), a DSP (*Digital Signal Processor)* or a microcontroller; or else implemented in hardware by a machine or a dedicated component, such as an FPGA (*Field-Programmable Gate Array*) or an ASIC *(Application-Specific Integrated Circuit*).

**Fig. 3** schematically represents an algorithm, performed by the proxy device 100, for handling data of the caching unit.

The algorithm starts in a step S301. In a following step S302, the proxy device 100 receives an advertisement message from the first communications network 101 or from the second communications network 102. The advertisement message includes information about the communications device having transmitted the advertisement message via the first communications network 101 or via the second communications network 102. Such information relates for instance to naming or addressing of said communications device, to configuration parameters of said communications device, to services or functionalities implemented by said communications device. When the mDNS protocol is implemented in the first 101 and second 102 communications networks, the advertisement message is a Gratuitous Multicast DNS Response.

In a following step S303, the proxy device 100 checks whether said proxy device 100 has authority for acting on behalf of the communications devices connected to the communications network from which the advertisement message has been received in the step S302. When the proxy device 100 doesn't have such authority, the algorithm ends in a step S312; otherwise a step S304 is performed.

The proxy device 100 stores a flag indicating, for each communications network that the proxy device 100 interconnects, whether the proxy device 100 has authority for acting on behalf of the communications devices connected to said communications network.

Whether the proxy device 100 has authority for each communications network may be defined as a configuration parameter, which can be setup by an administrator.

In the step S304, the proxy device 100 checks a time-to-live indication associated with the information included in the received advertisement message. When the mDNS protocol is implemented in the first 101 and second 102 communications networks, the proxy device 100 checks the TTL (Time-To-Live) field of the received advertisement message. When the time-to-live indication indicates that the information included in the received advertisement message has expired, a step S309 is performed; otherwise, a step S305 is performed. When the mDNS protocol is implemented in the first 101 and second 102 communications networks, the step S309 is performed when the TTL field has a null value. Indeed, according to the mDNS protocol rules, a communication device can clear a resource record preceding advertisement by sending a subsequent advertisement message with a null TTL field associated with said resource record.

In the step S305, the proxy device 100 searches in the data stored by the caching unit in order to determine whether the information included in the received advertisement message concerns a communication device already described among the data stored by the caching unit.

In a following step S306, the proxy device 100 checks whether information about said communication device has been found among the data stored by the caching unit. When such information has been found, a step S307 is performed; otherwise, a step S308 is performed.

In the step S307, the proxy device 100 updates the data stored by the caching unit, if needed, with supplementary or up-to-date information included in the received advertisement message. More particularly, the proxy device 100 at least updates a time-to-live indication stored in the caching unit in association with the information concerning said communication device with the time-to-live indication included in the received advertisement message. By doing so, the proxy device 100 collects up-to-date data and stores the collected data in the caching unit. Then, the algorithm ends in the step S312.

In the step S308, the proxy device 100 adds a new entry in the caching unit for said communication device. The proxy device 100 stores information included in the received advertisement message and concerning said communication device, in order to be able to respond later on to queries on behalf of said communications device. By doing so, the proxy device 100 collects new data and stores the collected data in the caching unit. Then, the algorithm ends in the step S312.

In the step S309, the proxy device 100 searches in the data stored by the caching unit in order to determine whether the information included in the received advertisement message concerns a communication device already described among the data stored by the caching unit.

In a following step S310, the proxy device 100 checks whether information about said communication device has been found among the data stored by the caching unit. When such information has been found, a step S311 is performed; otherwise, the algorithm ends in the step S312, as the advertisement message indicates validity expiry of data that was not previously stored by the caching unit.

In the step S311, the proxy device 100 removes from the caching unit the stored data concerning said communication device, or at least removed therefrom the information included in the received advertisement message and associated with the validity expiry indication, e.g. the information associated with the null TTL field when implementing the mDNS protocol. Then, the algorithm ends in the step S312.

In the algorithm of Fig. 3, it is considered that the proxy device 100 is not supposed to store advertisement data for communication devices connected to a communications network for which the proxy device 100 has no authority. In a variant, the proxy device 100 stores such advertisement data for communication devices connected to a communications network for which the proxy device 100 has no authority, the step S303 being in this case not performed. This would allow the proxy device 100 to anticipate a later change in the authority configuration.

**Fig. 4** schematically represents an algorithm, performed by the proxy device 100, for processing queries using the data stored by the caching unit.

In a step S401, the proxy device 100 receives a query from the first communications network 101 or from the second communications network 102.

In a following step S402, the proxy device 100 checks whether said proxy device 100 has authority for acting on behalf of the communications devices connected to the communications network to which said proxy device 100 is connected. When the proxy device 100 doesn't have such authority for all said communications network, a step S404 is performed; otherwise a step S403 is performed.

In the step S403, the proxy device 100 filters the data stored in the caching unit in order to withdraw the data concerning communication devices connected to each communication network for which the proxy device 100 has no authority. Only remains, for the need of the execution of the algorithm of Fig. 4, the data concerning communication devices connected to each communications network for which the proxy device 100 has authority. Then the step S404 is performed. When the step S403 is not performed, the whole content of the caching unit is considered.

In a variant, when the step S303 is performed in the algorithm of Fig. 3, the proxy device 100 does not store advertisement data for communication devices connected to a communications network for which the proxy device 100 has no authority. In this case, the steps S402 and S403 might be avoided.

In the step S404, the proxy device 100 checks whether the query has been transmitted as a multicast message. For instance, when the query is transmitted via a WiFi network in which the proxy device 100 is an access point, the query is transmitted as a unicast message to the access point, which is in charge of relaying the message via the WiFi in the form of a multicast message. However, in a Local Area Network (LAN), the communication device is expected to transmit the query directly in the form of a multicast message. When the mDNS protocol is implemented in the first 101 and second 102 communications networks, multicast messages are addressed to the IP address "224.0.0.251" and UDP port "5353".

When the query has been transmitted as a multicast message, a step S405 is performed; otherwise, a step S406 is performed.

In the step S405, the proxy device 100 filters the data stored in the caching unit, possibly already filtered via the step S403, in order to withdraw the data concerning communication devices connected to the communications network from which the multicast query has been received in the step S401. Indeed, as the query is in multicast form, there is no need for the proxy device 100 to act on behalf of other communication devices connected to said communications network. Then the step S406 is performed.

In the step S406, the proxy device 100 searches among the data stored by the caching unit, possibly filtered via the step S403 and/or the step S405, information for responding to the query. Queries usually concern information that are typically advertised by communication devices via the communications network to which said communication devices are connected. Queries typically are messages interrogating the communication devices connected to the communications whether, and which, said communication devices implement a certain functionality or service. The multicast queries often lead to plural responses transmitted by respective communication devices implementing said functionality or service. The proxy device 100 therefore extracts from the data stored by the caching unit information for responding to the query on behalf of each communication device for which information is stored by the caching unit and matches the query.

In a following step S407, the proxy device 100 checks whether the time-to-live indication associated with each information extracted from the caching unit shows expiry of the validity of said extracted information. When the time-to-live indication shows expiry of the validity of said extracted information, a step S408 is performed; otherwise, a step S412 is performed.

In the step S408, the proxy device 100 transmits at least one unicast query addressed to each communication for which the time-to-live indication showed validity expiry in the step S407, in order to update the data stored in the caching unit.

In a following step S409, the proxy device 100 checks whether each unicast query transmitted in the step S408 has been responded. When each unicast query transmitted in the step S408 has been responded, a step S410 is performed; otherwise, a step S411 is performed.

In the step S410, the proxy device 100 updates the data stored in the caching unit with information included in each response to each unicast query transmitted in the step S408. More particularly, the proxy device 100 at least updates the time-to-live indication stored in the caching unit in association with said information. Then, the step S412 is performed.

In the step S411, the proxy device 100 checks whether a timeout has expired. The timeout is representative of an instant at which a response to the query received in the step S401 shall be transmitted, with an optional predefined margin. In the mDNS protocol, the maximum delay to transmit a response is set to 500 ms. In other words, the proxy device postpones the steps of generating and transmitting the aggregated response message up to a predetermined instant at which the query received in the step S401 shall be responded. When the timeout has expired, the step S410 is performed for updating the data according to responses that have been received so far.

In the step S412, the proxy device 100 generates an aggregated response to the query received in the step S401, the aggregated response being built on the basis of the data extracted in the step S406.

For example, let's consider that the proxy device 100 has previously recorded in the caching unit information contained in advertisement messages transmitted by the communication devices 111, 112, 113, 121, 122 and 123. Let's further consider that the communication devices 111, 112 and 123 have all previously advertised implementing a service S, and that the time-to-live indication associated with the related advertised information shows that said information is still valid. Let's also consider that the communication device 113 transmits a query for discovering which communication devices of the first 101 and second 102 communications networks implement the service S. Let's also consider that the first communications network 101 is a Wi-Fi (registered trademark) network and that the second communications network is an Ethernet-based LAN (Local Area Network) network. The query transmitted by the communication device 113 is therefore in the form of a unicast message, for which the proxy device 100, acting as an access point, is supposed to generate and propagate respective multicast messages via the first communications network 101 and via the second communications network 102. Upon receiving the query, the proxy device 100 retrieves information contained in the advertisement messages previously transmitted by the communication devices 111, 112 and 123 for the service S. The proxy device 100 then generates a response message aggregating the information that was previously advertised by the communication devices 111, 112 and 123, and that has been retrieved from the caching unit. By doing so, the proxy device 100 avoids generating and propagating multicast messages for the query. The bandwidth consumption of the first 101 and second 102 communications network is thus improved, and the communication devices 111, 112 and 123 don't need to be awake to enable the communication device 113 obtaining the queried information.

In a following step S413, the proxy device 100 transmits the generated aggregated response message via the communications network from which the query has been received in the step S401.

In a particular embodiment, the proxy device 100 stores a configuration parameter indicating, for each communications network that the proxy device 100 interconnects, whether responses have to be transmitted by the proxy device 100 as unicast or multicast messages to the communication device having transmitted the corresponding query. The configuration parameter may depend on a type of the considered communications network. For instance, multicast responses are privileged on Ethernet networks, whereas multicast responses are privileged on Wi-Fi (registered trademark) networks, which optimizes network resource consumption.

In a following step S414, the proxy device 100 forwards the query to all communications networks for which the proxy device 100 has no authority, in order to allow each communication device that are connected to said communications network and that are supposed to respond to the query to do so.

When the proxy device 100 is not able to extract relevant response data in the step S406, the proxy device 100 may decide forwarding the query.

In any case, the proxy device 100 does not forward the query to the communications network from which said query has been received by the proxy device 100, when said query has been transmitted in multicast form.

Therefore, when the query is received in unicast form by the proxy device 100 via a wireless communications network, the proxy device 100 being supposed to propagate in multicast form the received query via said wireless communications network, the proxy device 100 effectively propagates the received query via said wireless communications network, only when the proxy device 100 has no authority for responding on behalf of communication devices connected thereto.

**Fig. 5** schematically represents an algorithm, performed by the proxy device 100, for keeping up-to-date the data stored by the caching unit.

In a step S501, the proxy device 100 parses the data stored by the caching unit for checking time-to-live indication associated with each stored data.

In a following step S502, the proxy device 100 checks whether the time-to-live indication, for at least one data, shows expiry of the validity of said data. Typically the time-to-live indication is representative of a time period P of validity of said data. The proxy device 100 may check in the step S502 whether said time period P of validity has expired. In a variant, the proxy device 100 checks in the step S502 whether a time period equal to N times said time period P of validity has expired since the last update of said time-to-live indication, wherein N is a positive integer greater than 1. This approach allows limiting message exchanges via the communications networks for polling communications devices in the context of maintaining up-to-date the data stored by the caching unit.

When the time-to-live indication, for at least one data, shows expiry of the validity of said data, a step S503 is performed; otherwise, the step S501 is repeated.

In the step S503, the proxy device 100 transmits at least one unicast query addressed to each communication for which the time-to-live indication showed validity expiry in the step S502, in order to update the data stored in the caching unit.

In a following step S504, the proxy device 100 checks whether each unicast query transmitted in the step S503 has been responded. When each unicast query transmitted in the step S503 has been responded, a step S505 is performed; otherwise, a step S506 is performed.

In the step S505, the proxy device 100 updates the data stored in the caching unit with information included each response to each unicast query transmitted in the step S503. More particularly, the proxy device 100 at least updates the time-to-live indication stored in the caching unit in association with said information. Then, the step S501 is repeated.

In the step S506, the proxy device 100 checks whether a timeout has expired. The timeout is representative of an instant at which a responses to the query transmitted in the step S503 is expected to be received by the proxy device 100. When the timeout has expired, a step S507 is performed; otherwise, the step S504 is repeated.

It has to be noticed that the proxy device 100 may re-transmit each non-responded query a predefined number of times when the timeout expires for said non-responded query.

In the step S507, the proxy device 100 removes from the caching unit the data concerned by each non-responded query. Then, the step S501 is repeated.

## Claims

1. A method performed by a proxy device (100) interconnecting at least a first and a second communications network (101, 102), communication devices (111, 112, 113, 121, 122, 123) connected to either said communications network (101, 102) transmitting advertisement messages, each including a piece of information about the communication device (111, 112, 113, 121, 122, 123) having transmitted the advertisement message, the piece of information relating to parameters of said communication device (111, 112, 113, 121, 122, 123) and/or functionalities implemented by said communication devices (111, 112, 113, 121, 122, 123) and/or services implemented by said communication device (111, 112, 113, 121, 122, 123), wherein said proxy device (100) performs:
- collecting the pieces of information included in advertisement messages received by the proxy device (100) from communication devices (111, 112, 113, 121, 122, 123) connected to either said communications network (101, 102);
- storing said collected pieces of information in a caching unit;
and, upon receiving a query about parameters of communication devices (111, 112, 113, 121, 122, 123) and/or functionalities implemented by communication devices (111, 112, 113, 121, 122, 123) and/or services implemented by communication devices (111, 112, 113, 121, 122, 123), the proxy device (100) further performs:
- retrieving, from the caching unit, pieces of information corresponding to the received query;
- generating a response message including the retrieved pieces of information; and
- transmitting, in response to the received query, the generated response message wherein, when the retrieved pieces of information comprise pieces of information about several communication devices (111, 112, 113, 121, 122, 123), the response message aggregates said retrieved pieces of information into the response message,
**characterized in that**, when retrieving the pieces of information corresponding to the received query from the caching unit, the proxy device (100) performs:
- filtering the pieces of information stored by the caching unit, by removing the pieces of information about communication devices (111, 112, 113, 121, 122, 123) connected to respective communication networks (101, 102) for which the proxy device (100) has no authority for responding on behalf of communication devices (111, 112, 113, 121, 122, 123) connected thereto; and
- forwarding the received query via each communications network (101, 102) for which the proxy device (100) has no authority for responding on behalf of communication devices (111, 112, 113, 121, 122, 123) connected thereto, except, when the received query is received in multicast form, the communications network (101, 102) from which said query has been received by the proxy device (100).

2. The method according to claim 1, **characterized in that**, when retrieving the pieces of information corresponding to the received query from the caching unit and when the received query is received in multicast form, the proxy device (100) filters the pieces of information stored by the caching unit, by removing the pieces of information about communication devices (111, 112, 113, 121, 122, 123) connected to the communications network (101, 102) from which said received query has been received by the proxy device (100).

3. The method according to claim 1 or 2, **characterized in that**, when the received query is received in unicast form by the proxy device (100) via a wireless communications network, the proxy device (100) propagates in multicast form the received query via said wireless communications network, only when the proxy device (100) has no authority for responding on behalf of communication devices (111, 112, 113, 121, 122, 123) connected thereto.

4. The method according to any one of claims 1 to 3, **characterized in that**, when retrieving the pieces of information corresponding to the received query from the caching unit, the proxy device (100) checks a time-to-live indication associated with the retrieved pieces of information, and when the time-to-live indication shows validity expiry of the retrieved pieces of information, the proxy (100) device performs:
- transmitting at least one query in unicast form to each communication device for which a piece of information is retrieved and associated with the time-to-live indication showing validity expiry, said at least one query being adapted to verify said validity; and
- postponing the steps of generating and transmitting the response message up to a predetermined instant at which the received query shall be responded, until at least one response to respective said at least one transmitted query in unicast form is received by the proxy device (100).

5. The method according to any one of claims 1 to 4, **characterized in that**, the pieces of information stored by the caching unit being associated with a time-to-live indication representative of a time period P of validity of said stored pieces of information, the proxy device (100) keeps up-to-date the stored pieces of information by:
- checking whether a time period equal to N times said time period P has expired since the last update of said time-to-live indication, wherein N is a positive integer greater than 1; and
- transmitting at least one query in unicast form to each communications device for which a piece of information is stored and associated with the time-to-live indication showing validity expiry, said at least one transmitted query being adapted to verify said validity.

6. The method according to any one of claims 1 to 5, **characterized in that**, the pieces of information stored by the caching unit being associated with a time-to-live indication representative of a time period of validity of said stored pieces of information, the proxy device keeps up-to-date the stored pieces of information by:
- receiving an advertisement including expired information associated with a null time-to-live indication; and
- removing from the caching unit the piece of information corresponding to said expired information.

7. The method according to any one of claims 1 to 6, **characterized in that** the proxy device stores a configuration parameter indicating, for each said communications network, whether responses to received queries have to be transmitted by the proxy device as unicast or multicast messages to the communication devices having respectively transmitted the queries.

8. The method according to claim 7, **characterized in that** the configuration parameter is defined according to a type of said communications network.

9. The method according to any one of claims 1 to 8, **characterized in that** advertisement messages and queries are in accordance with the mDNS protocol.

10. A computer program **characterized in that** it comprises program code instructions which can be loaded in a programmable device for implementing the method according to any one of claims 1 to 9, when the program code instructions are run by the programmable device.

11. Information storage means, **characterized in that** they store a computer program comprising program code instructions which can be loaded in a programmable device for implementing the method according to any one of claims I to 9, when the program code instructions are run by the programmable device.

12. A proxy device (100) intended to interconnect at least a first and a second communications network (101, 102), communication devices (111, 112, 113, 121, 122, 123) connected to either said communications network (101, 102) being adapted to transmit advertisement messages, each including a piece of information about the communication device (111, 112, 113, 121, 122, 123) having transmitted the advertisement message , the piece of information relating to parameters of said communication device (111, 112, 113, 121, 122, 123) and/or functionalities implemented by said communication device (111, 112, 113, 121, 122, 123) and/or services implemented by said communication device (111, 112, 113, 121, 122, 123), said proxy device (100) implementing:
- means for collecting the pieces of information included in advertisement messages received by the proxy device (100) from communication devices (111, 112, 113, 121, 122, 123) connected to either said communications network (101, 102)
- means for storing said collected pieces of information in a caching unit;
and, upon receiving a query about parameters of communication device (111, 112, 113, 121, 122, 123) and/or functionalities implemented by communication devices (111, 112, 113, 121, 122, 123) and/or services implemented by communication devices (111, 112, 1 13, 121, 122, 123), the proxy device (100) further implements:
- means for retrieving, from the caching unit, pieces of information corresponding to the received query;
- means for generating a response message including the retrieved pieces of information, wherein, when the retrieved pieces of information comprise pieces of information about several communication devices (111, 112, 113, 121, 122, 123), the response message aggregates said retrieved pieces of information into the response message; and
- means for transmitting, in response to the received query, the generated response message,
**characterized in that** said proxy device (100) further implements: means for, when retrieving the pieces of information corresponding to the received query from the caching unit:
- filtering the pieces of information stored by the caching unit, by removing the pieces of information about communication devices (111, 112, 113, 121, 122, 123) connected to respective communication networks (101, 102) for which the proxy device (100) has no authority for responding on behalf of communication devices (111, 112, 113, 121, 122, 123) connected thereto; and
- forwarding the received query via each communications network (101, 102) for which the proxy device (100) has no authority for responding on behalf of communication devices (111, 112, 113, 121, 122, 123) connected thereto, except, when the received query is received in multicast form, the communications network (101, 102) from which said query has been received by the proxy device (100).

## Patentansprüche

1. Verfahren, das durch eine Proxy-Vorrichtung (100) durchgeführt wird, die wenigstens ein erstes und ein zweites Kommunikationsnetzwerk (101, 102) miteinander verbindet, wobei mit einem der Kommunikationsnetzwerke (101, 102) verbundene Kommunikationsvorrichtungen (111, 112, 113, 121, 122, 123) Anzeigenachrichten senden, die jeweils ein Stück von Information über die Kommunikationsvorrichtung (111, 112, 113, 121, 122, 123) enthalten, die die Anzeigenachricht gesendet hat, wobei sich das Stück von Information auf Parameter der Kommunikationsvorrichtung (111, 112, 113, 121, 122, 123) und/oder durch die Kommunikationsvorrichtung (111, 112, 113, 121, 122, 123) implementierte Funktionalitäten und/oder durch die Kommunikationsvorrichtung (111, 112, 113, 121, 122, 123) implementierte Dienste bezieht, wobei die Proxy-Vorrichtung (100) folgendes durchführt:
- Sammeln der in durch die Proxy-Vorrichtung (100) von mit einem der Kommunikationsnetzwerke (101, 102) verbundenen Kommunikationsvorrichtungen (111, 112, 113, 121, 122, 123) empfangenen Anzeigenachrichten enthaltenen Stücke von Information;
- Speichern der gesammelten Stücke von Information in einer Cachespeichereinheit;
und die Proxy-Vorrichtung (100) auf ein Empfangen einer Anfrage über Parameter von Kommunikationsvorrichtungen (111, 112, 113, 121, 122, 123) und/oder durch Kommunikationsvorrichtungen (111, 112, 113, 121, 122, 123) implementierte Funktionalitäten und/oder durch Kommunikationsvorrichtungen (111, 112, 113, 121, 122, 123) implementierte Dienste hin weiterhin folgendes durchführt:
- Wiedergewinnen von Stücken von Information entsprechend der empfangenen Anfrage aus der Cachespeichereinheit;
- Erzeugen einer Antwortnachricht, die die wiedergewonnen Stücke von Information enthält; und
- Senden der erzeugten Antwortnachricht in Antwort auf die empfangene Anfrage,
wobei dann, wenn die wiedergewonnenen Stücke von Information Stücke von Information über einige Kommunikationsvorrichtungen (111, 112, 113, 121, 122, 123) aufweisen, die Antwortnachricht die wiedergewonnen Stücke von Information in die Antwortnachricht aggregiert,
**dadurch gekennzeichnet, dass** die Proxy-Vorrichtung (100) dann, wenn sie die Stücke von Information entsprechend der empfangenen Anfrage von der Cachespeichereinheit wiedergewinnt, folgendes durchführt:
- Filtern der durch die Cachespeichereinheit gespeicherten Stücke von Information durch Entfernen der Stücke von Information über Kommunikationsvorrichtungen (111, 112, 113, 121, 122, 123), die mit jeweiligen Kommunikationsnetzwerken (101, 102) verbunden sind, für welche die Proxy-Vorrichtung (100) keine Befugnis zum Antworten im Auftrag von damit verbundenen Kommunikationsvorrichtungen (111, 112, 113, 121, 122, 123) hat; und
Weiterleiten der empfangenen Anfrage über jedes Kommunikationsnetzwerk (101, 102), für welches die Proxy-Vorrichtung (100) keine Befugnis zum Antworten im Auftrag von damit verbundenen Kommunikationsvorrichtungen (111, 112, 113, 121, 122, 123) hat, außer, wenn die empfangene Anfrage in Multicast-Form empfangen wird, dem Kommunikationsnetzwerk (101, 102), von welchem die Anfrage durch die Proxy-Vorrichtung (100) empfangen worden ist.

2. Verfahren nach Anspruch 1, **dadurch gekennzeichnet, dass** dann, wenn sie die Stücke von Information entsprechend der empfangenen Anfrage von der Cachespeichereinheit wiedergewinnt und wenn die empfangene Anfrage in Multicast-Form empfangen wird, die Proxy-Vorrichtung (100) die durch die Cachespeichereinheit gespeicherten Stücke von Information durch Entfernen der Stücke von Information über Kommunikationsvorrichtungen (111, 112, 113, 121, 122, 123) filtert, die mit dem Kommunikationsnetzwerk (101, 102) verbunden sind, von welchem die empfangene Anfrage durch die Proxy-Vorrichtung (100) empfangen worden ist.

3. Verfahren nach Anspruch 1 oder 2, **dadurch gekennzeichnet, dass** dann, wenn die empfangene Anfrage durch die Proxy-Vorrichtung (100) über ein drahtloses Kommunikationsnetzwerk in Unicast-Form empfangen wird, die Proxy-Vorrichtung (100) die empfangene Anfrage über das drahtlose Kommunikationsnetzwerk nur dann in Multicast-Form ausbreitet, wenn die Proxy-Vorrichtung (100) keine Befugnis zum Antworten im Auftrag von damit verbundenen Kommunikationsvorrichtungen (111, 112, 113, 121, 122, 123) hat.

4. Verfahren nach einem der Ansprüche 1 bis 3, **dadurch gekennzeichnet, dass** dann, wenn sie die Stücke von Information entsprechend der empfangenen Anfrage von der Cachespeichereinheit wiedergewinnt, die Proxy-Vorrichtung (100) ein mit den wiedergewonnenen Stücken von Information verbundenes Lebenszeit- bzw. Time-To-Live- bzw. TTL-Anzeichen prüft, und die Proxy-Vorrichtung (100) dann, wenn das TTL-Anzeichen einen Gültigkeitsablauf der wiedergewonnen Stücke von Information zeigt, folgendes durchführt:
- Senden wenigstens einer Anfrage in Unicast-Form zu jeder Kommunikationsvorrichtung, für welche ein Stück von Information wiedergewonnen und mit dem TTL-Anzeichen, das einen Gültigkeitsablauf zeigt, verbunden ist, wobei die wenigstens eine Anfrage dazu geeignet ist, die Gültigkeit zu verifizieren; und
- Hinausschieben der Schritte zum Erzeugen und Senden der Antwortnachricht bis zu einem vorbestimmten Moment, zu welchem die empfangene Anfrage beantwortet werden soll, bis wenigstens eine Antwort auf jeweils die wenigstens eine gesendete Anfrage in Unicast-Form durch die Proxy-Vorrichtung (100) empfangen wird.

5. Verfahren nach einem der Ansprüche 1 bis 4, **dadurch gekennzeichnet, dass**, während die durch die Cachespeichereinheit gespeicherten Stücke von Information mit dem TTL-Anzeichen verbunden sind, das eine Zeitdauer P einer Gültigkeit der gespeicherten Stücke von Information darstellt, die Proxy-Vorrichtung (100) die gespeicherten Stücke von Information durch folgendes auf dem neuesten Stand hält:
- Prüfen, ob eine Zeitdauer gleich N mal der Zeitdauer P seit dem letzten Update des TTL-Anzeichens abgelaufen ist, wobei N eine positive ganze Zahl größer als 1 ist; und
- Senden wenigstens einer Anfrage in Unicast-Form zu jeder Kommunikationsvorrichtung, für welche ein Stück von Information gespeichert und mit dem TTL-Anzeichen verbunden ist, das einen Gültigkeitsablauf zeigt, wobei die wenigstens eine gesendete Anfrage dazu geeignet ist, die Gültigkeit zu verifizieren.

6. Verfahren nach einem der Ansprüche 1 bis 5, **dadurch gekennzeichnet, dass**, während die durch die Cachespeichereinheit gespeicherten Stücke von Information mit dem TTL-Anzeichen verbunden sind, das eine Zeitdauer einer Gültigkeit der gespeicherten Stücke von Information darstellt, die Proxy-Vorrichtung die gespeicherten Stücke von Information durch folgendes auf dem neuesten Stand hält:
- Empfangen einer Anzeige, die abgelaufene Information enthält, die mit einem Null-TTL-Anzeichen verbunden ist; und
- Entfernen des Stücks von Information entsprechend der abgelaufenen Information von der Cachespeichereinheit.

7. Verfahren nach einem der Ansprüche 1 bis 6, **dadurch gekennzeichnet, dass** die Proxy-Vorrichtung einen Konfigurationsparameter speichert, der für jedes Kommunikationsnetzwerk anzeigt, ob Antworten auf empfangene Anfragen durch die Proxy-Vorrichtung als Unicast- oder Multicast-Nachrichten zu den Kommunikationsvorrichtungen gesendet werden müssen, die jeweils die Anfragen gesendet haben.

8. Verfahren nach Anspruch 7, **dadurch gekennzeichnet, dass** der Konfigurationsparameter gemäß einem Typ des Kommunikationsnetzwerks definiert ist.

9. Verfahren nach einem der Ansprüche 1 bis 8, **dadurch gekennzeichnet, dass** Anzeigenachrichten und Anfragen gemäß dem mDNS-Protokoll sind.

10. Computerprogramm, **dadurch gekennzeichnet, dass** es Programmcodeanweisungen aufweist, die in einer programmierbaren Vorrichtung geladen sein können, zum Implementieren des Verfahrens nach einem der Ansprüche 1 bis 9, wenn man die Programmcodeanweisungen durch die programmierbare Vorrichtung laufen lässt.

11. Informationsspeichereinrichtung, **dadurch gekennzeichnet, dass** sie ein Computerprogramm mit Programmcodeanweisungen speichert, die in einer programmierbaren Vorrichtung geladen sein können, zum Implementieren des Verfahrens nach einem der Ansprüche 1 bis 9, wenn man die Programmcodeanweisungen durch die programmierbare Vorrichtung laufen lässt.

12. Proxy-Vorrichtung (100), die wenigstens ein erstes und ein zweites Kommunikationsnetzwerk (101, 102) miteinander verbinden soll, wobei mit einem der Kommunikationsnetzwerke (101, 102) verbundene Kommunikationsvorrichtungen (111, 112, 113, 121, 122, 123) dazu geeignet sind, Anzeigenachrichten zu senden, die jeweils ein Stück von Information über die Kommunikationsvorrichtung (111, 112, 113, 121, 122, 123) enthalten, die die Anzeigenachricht gesendet hat, wobei sich das Stück von Information auf Parameter der Kommunikationsvorrichtung (111, 112, 113, 121, 122, 123) und/oder durch die Kommunikationsvorrichtung (111, 112, 113, 121, 122, 123) implementierte Funktionalitäten und/oder durch die Kommunikationsvorrichtung (111, 112, 113, 121, 122, 123) implementierte Dienste bezieht, wobei die Proxy-Vorrichtung (100) folgendes implementiert:
- eine Einrichtung zum Sammeln der in durch die Proxy-Vorrichtung (100) von mit einem der Kommunikationsnetzwerke (101, 102) verbundenen Kommunikationsvorrichtungen (111, 112, 113, 121, 122, 123) empfangenen Anzeigenachrichten enthaltenen Stücke von Information;
- eine Einrichtung zum Speichern der gesammelten Stücke von Information in einer Cachespeichereinheit;
und die Proxy-Vorrichtung (100) auf ein Empfangen einer Anfrage über Parameter von Kommunikationsvorrichtungen (111, 112, 113, 121, 122, 123) und/oder durch Kommunikationsvorrichtungen (111, 112, 113, 121, 122, 123) implementierte Funktionalitäten und/oder durch Kommunikationsvorrichtungen (111, 112, 113, 121, 122, 123) implementierte Dienste hin weiterhin folgendes implementiert:
- eine Einrichtung zum Wiedergewinnen von Stücken von Information entsprechend der empfangenen Anfrage aus der Cachespeichereinheit;
- eine Einrichtung zum Erzeugen einer Antwortnachricht, die die wiedergewonnen Stücke von Information enthält, wobei dann, wenn die wiedergewonnenen Stücke von Information Stücke von Information über einige Kommunikationsvorrichtungen (111, 112, 113, 121, 122, 123) aufweisen, die Antwortnachricht die wiedergewonnen Stücke von Information in die Antwortnachricht aggregiert; und
- eine Einrichtung zum Senden der erzeugten Antwortnachricht in Antwort auf die empfangene Anfrage,
**dadurch gekennzeichnet, dass** die Proxy-Vorrichtung (100) weiterhin folgendes implementiert:
dann, wenn sie die Stücke von Information entsprechend der empfangenen Anfrage von der Cachespeichereinheit wiedergewinnt, eine Einrichtung zum:
- Filtern der durch die Cachespeichereinheit gespeicherten Stücke von Information durch Entfernen der Stücke von Information über Kommunikationsvorrichtungen (111, 112, 113, 121, 122, 123), die mit jeweiligen Kommunikationsnetzwerken (101, 102) verbunden sind, für welche die Proxy-Vorrichtung (100) keine Befugnis zum Antworten im Auftrag von damit verbundenen Kommunikationsvorrichtungen (111, 112, 113, 121, 122, 123) hat; und
Weiterleiten der empfangenen Anfrage über jedes Kommunikationsnetzwerk (101, 102), für welches die Proxy-Vorrichtung (100) keine Befugnis zum Antworten im Auftrag von damit verbundenen Kommunikationsvorrichtungen (111, 112, 113, 121, 122, 123) hat, außer, wenn die empfangene Anfrage in Multicast-Form empfangen wird, dem Kommunikationsnetzwerk (101, 102), von welchem die Anfrage durch die Proxy-Vorrichtung (100) empfangen worden ist.

## Revendications

1. Procédé effectué par un dispositif mandataire (100) interconnectant au moins un premier et un second réseau de communication (101, 102), des dispositifs de communication (111, 112, 113, 121, 122, 123) connectés à l'un ou l'autre desdits réseaux de communication (101, 102) transmettant des messages d'annonce, chacun incluant une information à propos du dispositif de communication (111, 112, 113, 121, 122, 123) ayant transmis le message d'annonce, l'information étant relative à des paramètres dudit dispositif de communication (111, 112, 113, 121, 122, 123) et/ou des fonctionnalités implémentées par ledit dispositif de communication (111, 112, 113, 121, 122, 123), dans lequel ledit dispositif mandataire (100) effectue :
- collecter les informations incluses dans des messages d'annonce reçus par le dispositif mandataire (100) en provenance de dispositifs de communication (111, 112, 113, 121, 122, 123) connectés à l'un ou l'autre desdits réseaux de communication (101, 102) ;
- stocker lesdites informations collectées dans une unité de cache ;
et, sur réception d'une requête à propos de paramètres de dispositifs de communication (111, 112, 113, 121, 122, 123) et/ou de fonctionnalités implémentées par des dispositifs de communication (111, 112, 113, 121, 122, 123), le dispositif mandataire effectue en outre :
- retrouver, à partir de l'unité de cache, des informations correspondant à la requête reçue ;
- générer un message de réponse incluant les informations retrouvées ; et
- transmettre, en réponse à la requête reçue, le message de réponse généré,
où, lorsque les informations retrouvées comportent des informations à propos de plusieurs dispositifs de communication (111, 112, 113, 121, 122, 123), le message de réponse agrège lesdites informations retrouvées dans le message de réponse,
**caractérisé en ce que**, en retrouvant les informations correspondant à la requête reçue à partir de l'unité de cache, le dispositif mandataire (100) effectue :
- filtrer les informations stockées par l'unité de cache, en enlevant les informations à propos de dispositifs de communication (111, 112, 113, 121, 122, 123) connectés à des réseaux de communication respectifs pour lesquels le dispositif mandataire n'a pas d'autorité pour répondre pour le compte de dispositifs de communication (111, 112, 113, 121, 122, 123) qui y sont connectés ; et
- faire suivre la requête reçue via chaque réseau de communication (101, 102) pour lequel le dispositif mandataire n'a pas d'autorité pour répondre pour le compte de dispositifs de communication (111, 112, 113, 121, 122, 123) qui y sont connectés, sauf, lorsque la requête reçue est reçue sous forme point-multipoint, le réseau de communication (101, 102) en provenance duquel ladite requête a été reçue par le dispositif mandataire (100).

2. Procédé selon la revendication 1, **caractérisé en ce que**, en retrouvant les informations correspondant à la requête reçue à partir de l'unité de cache et lorsque la requête reçue est reçue sous forme point-multipoint, le dispositif mandataire (100) filtre les informations stockées dans l'unité cache en retirant les informations à propos de dispositifs de communication (111, 112, 113, 121, 122, 123) connectés au réseau de communication (101, 102) en provenance duquel ladite requête reçue a été reçue par le dispositif mandataire (100).

3. Procédé selon la revendication 1 ou 2, **caractérisé en ce que**, lorsque la requête reçue est reçue sous forme point-à-point par le dispositif mandataire (100) via un réseau de communication sans-fil, le dispositif mandataire (100) propage sous forme point-multipoint via ledit réseau de communication sans-fil la requête reçue, seulement lorsque le dispositif mandataire (100) n'a pas autorité pour répondre pour le compte de dispositifs de communication (111, 112, 113, 121, 122, 123) qui y sont connectés.

4. Procédé selon l'une quelconque des revendications 1 à 3, **caractérisé en ce que**, en retrouvant les informations correspondant à la requête reçue à partir de l'unité de cache, le dispositif mandataire (100) contrôle une indication de durée de vie restante associée avec les informations retrouvées, et lorsque l'indication de durée de vie restante montre une expiration de validité des informations retrouvées, le dispositif mandataire (100) effectue :
- transmettre au moins une requête sous forme point-à-point à chaque dispositif de communication pour lequel une information est retrouvée et associée avec l'indication de durée de vie restante montrant une expiration de validité, ladite au moins une requête étant adaptée pour vérifier ladite validité ; et
- reporter les étapes de génération et de transmission du message de réponse au plus jusqu'à un instant prédéterminé auquel il doit être répondu à la requête reçue, jusqu'à ce qu'au moins une réponse à une dite requête respective transmise sous forme point-à-point est reçue par le dispositif mandataire (100).

5. Procédé selon l'une quelconque des revendications 1 à 4, **caractérisé en ce que**, les informations stockées dans l'unité de cache étant associée avec une indication de durée de vie restante représentative d'une période temporelle P de validité desdites informations stockées, le dispositif mandataire (100) maintient à jour les informations stockées en :
- contrôlant si une période temporelle égale à N fois ladite période temporelle P a expiré depuis la dernière mise à jour de ladite indication de durée de vie restante, où N est un entier positif supérieur à 1 ; et en
- transmettant au moins une requête sous forme point-à-point à chaque dispositif de communication pour lequel une information est stockée et associée avec l'indication de durée de vie restante montrant une expiration de validité, ladite au moins une requête transmise étant adaptée pour vérifier ladite validité.

6. Procédé selon l'une quelconque des revendications 1 à 5, **caractérisé en ce que**, les informations stockées dans l'unité de cache étant associée avec une indication de durée de vie restante représentative d'une période temporelle de validité desdites informations stockées, le dispositif mandataire (100) maintient à jour les informations stockées en :
- recevant une annonce incluant une information expirée associée avec une indication de durée de vie restante nulle ; et en
- retirant de l'unité de cache les informations correspondant à ladite information expirée.

7. Procédé selon l'une quelconque des revendications 1 à 6, **caractérisé en ce que** le dispositif mandataire stocke un paramètre de configuration indiquant, pour chaque réseau de communication, si des réponses à des requêtes reçues doivent être transmises par le dispositif mandataire sous forme de messages point-multipoint ou bien point-à-point aux dispositifs de communication ayant respectivement transmis lesdites requêtes.

8. Procédé selon la revendication 7, **caractérisé en ce que** le paramètre de configuration est défini selon un type dudit réseau de communication.

9. Procédé selon l'une quelconque des revendications 1 à 8, **caractérisé en ce que** des messages d'annonce et des requêtes sont selon le protocole mDNS.

10. Programme d'ordinateur **caractérisé en ce qu'**il comporte des instructions de code de programme qui peuvent être chargées dans un dispositif programmable pour implémenter le procédé selon l'une quelconque des revendications 1 à 9, lorsque les instructions de code de programme sont exécutées par le dispositif programmable.

11. Moyens de stockage d'informations, **caractérisés en ce qu'**ils stockent un programme d'ordinateur comportant des instructions de code de programme qui peuvent être chargées dans un dispositif programmable pour implémenter le procédé selon l'une quelconque des revendications 1 à 9, lorsque les instructions de code de programme sont exécutées par le dispositif programmable.

12. Dispositif mandataire (100) destiné à interconnecter au moins un premier et un second réseau de communication (101, 102), des dispositifs de communication (111, 112, 113, 121, 122, 123) connectés à l'un ou l'autre desdits réseaux de communication (101, 102) étant adaptés pour transmettre des messages d'annonce, chacun incluant une information à propos du dispositif de communication (111, 112, 113, 121, 122, 123) ayant transmis le message d'annonce, l'information étant relative à des paramètres dudit dispositif de communication (111, 112, 113, 121, 122, 123) et/ou des fonctionnalités implémentées par ledit dispositif de communication (111, 112, 113, 121, 122, 123), ledit dispositif mandataire (100) implémentant :
- des moyens pour collecter les informations incluses dans des messages d'annonce reçus par le dispositif mandataire (100) en provenance de dispositifs de communication (111, 112, 113, 121, 122, 123) connectés à l'un ou l'autre desdits réseaux de communication (101, 102) ;
- des moyens pour stocker lesdites informations collectées dans une unité de cache ;
et, sur réception d'une requête à propos de paramètres de dispositifs de communication (111, 112, 113, 121, 122, 123) edou de fonctionnalités implémentées par des dispositifs de communication (111, 112, 113, 121, 122, 123), le dispositif mandataire effectue en outre :
- des moyens pour retrouver, à partir de l'unité de cache, des informations correspondant à la requête reçue ;
- des moyens pour générer un message de réponse incluant les informations retrouvées où, lorsque les informations retrouvées comportent des informations à propos de plusieurs dispositifs de communication (111, 112, 113, 121, 122, 123), le message de réponse agrège lesdites informations retrouvées dans le message de réponse ; et
- des moyens pour transmettre, en réponse à la requête reçue, le message de réponse généré,
**caractérisé en ce que** ledit dispositif mandataire (100) implémente en outre des moyens, afin de retrouver les informations correspondant à la requête reçue à partir de l'unité de cache, pour :
- filtrer les informations stockées par l'unité de cache, en enlevant les informations à propos de dispositifs de communication (111, 112, 113, 121, 122, 123) connectés à des réseaux de communication respectifs pour lesquels le dispositif mandataire n'a pas d'autorité pour répondre pour le compte de dispositifs de communication (111, 112, 113, 121, 122, 123) qui y sont connectés ; et
- faire suivre la requête reçue via chaque réseau de communication (101, 102) pour lequel le dispositif mandataire n'a pas d'autorité pour répondre pour le compte de dispositifs de communication (111, 112, 113, 121, 122, 123) qui y sont connectés, sauf, lorsque la requête reçue est reçue sous forme point-multipoint, le réseau de communication (101, 102) en provenance duquel ladite requête a été reçue par le dispositif mandataire (100).
